# EUROPÄISCHE PATENTSCHRIFT

(11) **EP 1 066 417 B1**
(45) Veröffentlichungstag und Bekanntmachung des Hinweises auf die Patenterteilung: **20.04.2005**
(21) Anmeldenummer: 99937953.0
(22) Anmeldetag: 01.03.1999
(51) Int. Cl.: C25B 1/02, C25B 9/00

(54) **VERFAHREN UND VORRICHTUNG ZUR GEWINNUNG VON SYNTHESEGAS**
METHOD AND DEVICE FOR OBTAINING SYNTHESIS GAS
PROCEDE ET DISPOSITIF D'OBTENTION DE GAZ DE SYNTHESE

(30) Priorität: 01.03.1998 DE 19808411
(43) Veröffentlichungstag der Anmeldung: 10.01.2001
(73) Patentinhaber: Rennebeck, Klaus, 73240 Wendlingen (DE)
(72) Erfinder: Rennebeck, Klaus, 73240 Wendlingen (DE)
(74) Vertreter: Patentanwälte Hosenthien-Held und Dr. Held
(86) Internationale Anmeldenummer: PCT/EP1999/001325
(87) Internationale Veröffentlichungsnummer: WO 1999/045172

(56) Entgegenhaltungen:
- WO-A-97/26225
- DE-A- 4 235 125
- US-A- 3 228 797
- US-A- 4 793 904

## Beschreibung

Die vorliegende Erfindung betrifft ein Verfahren und eine Vorrichtung zur Erzeugung von Synthesegas.

Im Zuge der fortschreitenden Entwicklung von Brennstoffzellen zur Erzeugung elektrischer Energie besteht eine erhöhte Nachfrage an wasserstoffhaltigen Brennstoffen für die Brennstoffzellenreaktion. Diese Brennstoffe können entweder Wasserstoffgas oder aber eine wasserstoffhaltige Verbindung, wie z.B. Methylalkohol, der direkt oder nach einem vorgeschalteten Gasreformierungsprozess in die Brennstoffzelle eingeleitet wird, sein. Insbesondere bei der Verwendung von Brennstoffzellen für elektrisch betriebene Kraftfahrzeuge ist es von Vorteil, wenn der Brennstoff direkt innerhalb des Fahrzeuges zur Verfügung gestellt werden kann. Ein mögliches Verfahren zur Erzeugung von Wasserstoff als Brennstoff oder als Ausgangsprodukt für die Erzeugung eines wasserstoffhaltigen Brennstoffes stellt beispielsweise die an sich bekannte Synthesegasgewinnung aus den Stoffen CO₂ und H₂O dar. Gegenwärtig erfolgt die Synthesegasgewinnung im Hochdruckelektrolyseverfahren bei etwa 1000°C in größeren Anlagen.

Das Prinzip einer solchen Synthesegasgewinnung ist beispielsweise in dem Artikel "Herstellung von flüssigen Kraftstoffen aus atmosphärischem Kohlendioxid" von M. Specht und A. Bandi, erschienen in "Themen 94/95" des Forschungsverbundes Sonnenenergie, beschrieben. Gemäß dieser Druckschrift wird ein Rohrreaktor für die Synthesegasherstellung verwendet. Für den Einsatz in Kraftfahrzeugen wird jedoch ein Verfahren benötigt, das bei möglichst geringem Raumbedarf eine hocheffiziente Synthesegasausbeute ermöglicht.

Es ist demzufolge die Aufgabe der vorliegenden Erfindung, ein Verfahren und eine Vorrichtung anzugeben, die die Erzeugung von Synthesegas bei geringem Raumbedarf, z.B. direkt an Bord eines Kraftfahrzeuges, ermöglichen.

Diese Aufgabe wird erfindungsgemäß durch das Verfahren nach Anspruch 1 sowie die Vorrichtung nach Anspruch 14 gelöst.

Bei dem erfindungsgemäßen Verfahren zur Synthesegasgewinnung durch Elektrolyse wird die Elektrolyse unter Verwendung von textilen Mikrohohlfasem als Feststoffelektrolyten, deren Innen- und Außenoberflächen die Anoden bzw. Kathoden tragen, durchgeführt.

Die Verwendung von textilen Mikrohohlfasern als Feststoffelektrolyten hat den Vorteil, daß für die Elektrolysereaktion nur wenig Raum bei gleichzeitig großer Elektrodenoberfläche benötigt wird. Unter textilen Fasern werden im allgemeinen solche Fasem verstanden, die sich textil verarbeiten lassen. Solche Fasern weisen eine im Vergleich zu ihrem Querschnitt große Länge sowie eine ausreichende Festigkeit und Biegsamkeit auf. Aufgrund der geringen Durchmesser und der entsprechend kleinen Wandstärken dieser Fasern findet die Diffusion durch die Hohlfasern im Vergleich zu den Rohrreaktoren des Standes der Technik in äußerst kurzer Zeit statt. Für die Verwendung der Mikrohohlfasem in dem erfindungsgemäßen Verfahren müssen diese äußerst homogen bezüglich ihrer Abmessungen sein, um einen einheitlichen Reaktionsverlauf sicherzustellen. Aus diesem Grund sollten die Schwankungen von Wandstärke und Außendurchmesser der Mikrohohlfasem nicht mehr als jeweils etwa +/- 10%, insbesondere nicht mehr als jeweils etwa +/- 8% betragen. Besonders bevorzugt sind solche Mikrohohlfasem, bei denen diese Schwankungen jeweils unter +/- 6% liegen.

Die Herstellung derartiger Mikrohohlfasem ist beispielsweise in der EP-A-0 874 788 desselben Anmelders beschrieben. Die Mikrohohlfasem lassen sich mit sehr geringen Wandstärken von etwa 0,01 bis 15 µm und Außendurchmessem von bis herab zu 0,5 bis 35 µm herstellen. Aufgrund der geringen Abmessungen weisen solche Mikrohohlfasem textile Eigenschaften auf, d.h. sie lassen sich insbesondere leicht biegen, ohne zu zerbrechen. Durch das in der EP-A-0 874 788 beschriebene Herstellungsverfahren können die Mikrohohlfasern mit hochgenauen Abmessungen erzeugt werden, wobei die Schwankungsbreite von Wandstärke und Außendurchmesser nicht mehr als etwa +/- 6% beträgt. Die Präzision der Einhaltung der Größen des Durchmessers und insbesondere der Wandstärke gewährleistet einen homogenen Reaktionsverlauf über die gesamte Länge der Hohlfaser.

Alternativ dazu ist es möglich, die benötigten Hohlfasern aus planaren glatten oder strukturierten plastischen bipolaren Elektrolytfolien herzustellen, welche zu Halmen gerollt oder zu Wendel- bzw. Spiralröhrchen gewickelt werden. Auf diese Weise lassen sich insbesondere Hohlfasern mit einem Außendurchmesser von etwa 0,28 bis 10 mm herstellen. Beim Rollen der Folie zu Halmen wird in diesem Zusammenhang analog zu dem Verfahren vorgegangen, das beispielsweise für die Zigarettenherstellung bekannt ist. Die Länge der so hergestellten Halme oder Spiralröhrchen liegt allgemein vorzugsweise zwischen etwa 0,03 m und 3,00 m, wobei für die Verwendung der Halme im erfindungsgemäßen Verfahren zur Synthesegasherstellung eine Länge von etwa 0,03 m bis etwa 0,20 m bevorzugt ist. Es ist möglich, jedes gewünschte und technisch sinnvolle Längen-Durcbmesserverhältnis zu verwirklichen. Nach der Ausformung der Halme bzw. Spiralröhrchen werden diese keramisch gebrannt. Die Elektrolytfolien können gemeinsam mit dem Elektrodenmaterial extrudiert werden, bevor sie zu Halmen bzw. Spiralröhrchen weiterverarbeitet werden. Zur Herstellung der Elektrolytfolien kann in diesem Zusammenhang insbesondere das Solgel-Verfahren angewendet werden.

Durch die Verwendung strukturierter, z.B. plissierter, oder gewölbter bzw. gewellter Elektrolytfolien für die Halm- bzw. Spiralröhrchenherstellung kann die Oberfläche der Halme bzw. Röhrchen, die für die Reaktion zur Verfügung steht, weiter vergrößert werden. Ein weiterer Vorteil der Verwendung strukturierter Folien liegt in der erhöhten Biegefestigkeit, die die daraus hergestellten Halme und Röhrchen aufweisen.

Als Ausgangsmaterialien für die im erfindungsgemäßen Verfahren eingesetzten Mikrohohlfasern können unter anderem hydrolysierbare Stoffe, Kollagen, Proteine, Harnstoff, Gelatine, Stärke oder Keramikmaterialien bzw. die Vorläufer eines keramischen Materials verwendet werden.

Die für die Synthesegaserzeuung benötigte Wärmeenergie kann z.B. durch Wässerung eines Zeoliths bereitgestellt werden. Als Wärmespeicher eignen sich des weiteren Schmelzen von Aluminium und Zinn. Auch der Einsatz eines katalytischen atmosphärischen Brenners ist denkbar.

Zur Verbesserung der Reaktivität und zum Erreichen einer niederen Betriebstemperatur sind die textilen Mikrohohlfasern beiderseits mit einem Katalysator, vorzugsweise eines Elements der achten Nebengruppe, wobei Platin als besonders geeinet gilt, beschichtet. Mit diesem Katalysator kann eine effektive Synthesegasreaktion bereits bei etwa 85°C bis 180°C bzw. 500°C bis 730°C im Falle der Hochtemperaturelektrolyse und bei einem Druck von etwa 0,1 bis 3 bar stattfinden. Der Druckbehälter sollte dabei für einen Druck bis zu 12 bar ausgelegt sein. Bei Verwendung eines Platinkatalysators ist die Zahl der Atome pro Cluster vorzugsweise auf 8 bis 15 erhöht. Auf diese Weise läßt sich zusätzlich eine Materialersparnis erzielen. Des weiteren läßt sich durch die erhöhte Zahl der Atome in den Clustem die Anspringzeit des Katalysators verkürzen und die Reaktionsfähigkeit der Reaktanten erhöhen. Der Katalysator muß in porösem Zustand vorliegen, um den Gasdurchtritt durch die Mikrohohlfasermembran nicht zu behindern.

Als Katalysatoren sind weiter folgende Materialien geeignet: Spinnel (MgAlO), Titandioxid (in seiner Anatasform), Vanadiumpentoxid, Wolframtrioxid, Kupferoxid, Molybdänoxid und Eisenoxid. Es ist sowohl schweres als auch leichtes Platin als Katalysatormaterial geeignet.

Vorzugsweise sind die textilen Mikrohohlfasern aus einem Oxid der Titangruppe, das mit einem Seltenen Erdmetall stabilisiert ist, hergestellt. Besonders bevorzugt werden für das erfindungsgemäße Verfahren textile Mikrohohlfasern, die aus Yttrium-stabilisiertem Zirkoniumoxid hergestellt sind. Dieses Material ist als Elektrolytmaterial bekannt und hat sich insbesondere unter den für die Elektrolyse benötigten Temperaturbedingungen hervorragend bewährt.

Für die Verwendung in dem erfindungsgemäßen Verfahren zur Synthesegaserzeugung werden Mikrohohlfasern mit einem Außendurchmesser von 1 µm bis 280 µm, insbesondere zwischen 50 µm und 280 µm, besonders bevorzugt. Hohlfasern dieser Abmessungen lassen sich gut in Stapeln anordnen und sind leicht zu handhaben. Zudem bieten sie ein ausgezeichnetes Oberflächen-Volumenverhältnis.

Das erfindungsgemäße Verfahren wird vorzugsweise so geführt, daß Kohlendioxid und Wasser oder Wasserdampf in jeweils ein Ende der Hohlfaserlumen eingeleitet und einer Hochtemperaturelekrolyse unterzogen werden, wobei durch die Hohlfaserwand als Permeat austretender Sauerstoff getrennt von dem aus dem zweiten Ende der Hohlfaserlumen austretenden Synthesegas Kohlenmonoxid und Wasserstoff abgeleitet wird. Der entstandene Sauerstoff kann anschließend beispielsweise in eine Brennstoffzelle eingeleitet werden. Auf diese Weise ist sowohl eine Nutzung des im Synthesegas enthaltenen Wasserstoffgases als auch des als "Nebenprodukt" entstehenden Sauerstoffs möglich.

Um den im Synthesegas enthaltenen Wasserstoff nach dem Austritt aus dem Lumen des Hohlfaserelektrolyten vom Kohlenmonoxid zu trennen, kann der Wasserstoff durch eine Gastrennmembran geleitet werden. Die Porosität der Membran muß dann so gewählt werden, daß der gasförmige Wasserstoff hindurchdiffundieren kann, während das Kohlenmonoxid auf der Zufuhrseite verbleibt. Eine möglichst saubere Trennung der beiden Gasbestandteile ist insbesondere unter dem Gesichtspunkt einer hohen Effizienz nachfolgender Verfahrensschritte, bei denen ein oder beide Bestandteile des Synthesegases eingesetzt werden, wünschenswert.

Die Gastrennmembran kann ebenfalls als Mikrohohlfaser ausgebildet sein. In diesem Fall wird das aus den Elektrolyt-Mikrohohlfasern ausgeleitete Synthesegas in das Lumen der Gastrenn-Hohlfasem eingeleitet. Die Abmessungen der für die Gastrennung verwendeten Mikrohohlfasern können dabei im wesentlichen gleich denen der für die Synthesegaserzegugung eingesetzten sein, wobei auf den Hohlfasern für die Gastrennung keine Elektroden benötigt werden.

Das erfindungsgemäße Verfahren kann im Rahmen eines Systems zur Gewinnung elektrischer Energie durch Brennstoffzellen, insbesondere an Bord eines Kraftfahrzeuges eingesetzt werden. Dabei liefert die Synthesegasreaktion das für den Betrieb der Brennstoffzelle benötigte Wasserstoffgas, das direkt in die Brennstoffzelle eingespeist werden oder aber zu kohlenwasserstoffhaltigen Verbindungen, insbesondere Methylalkohol, weiterverarbeitet werden kann. Der Zwischenschritt der Methylalkoholherstellung weist den Vorteil auf, daß der erzeugte Methylalkohol, da er bei Normalbedingungen flüssig ist, leicht gelagert bzw. zwischengespeichert werden kann, z.B. an Bord eines Kraftfahrzeuges. Auf diese Weise lassen sich Brennstofferzeugung und Verwendung besser zeitlich entkoppeln.

Der im Synthesegas enthaltene Wasserstoff kann demzufolge nach seiner Abtrennung einer Brennstoffzelle als Brennstoff zugeführt werden. In der Brennstoffzelle findet dann eine Oxidationsreaktion unter Freisetzung von Energie statt, die beispielsweise für den Antrieb eines Elektrofahrzeugs genutzt werden kann.

Im Sinne einer Mehrfachnutzung der beteiligten Reaktionsprodukte wird vorzugsweise mindestens ein Reaktionsprodukt der Brennstoffzellenreaktion in die Synthesegasreaktion rückgeführt. Beispielsweise kann das bei der Brennstoffzellenreaktion gebildete Kohlendioxid nach CO₂ + 3H₂ → CH₃OH + H₂O ebenfalls zur Methylalkoholsynthese verwendet werden.

Das im Synthesegas enthaltene Kohlenmonoxid kann abgetrennt und mit Wasserstoff oder einem Wasserstofflieferanten zu einer Kohlenwasserstoff enthaltenden Verbindung, insbesondere Methylalkohol, synthetisiert werden. Die zugehörige Reaktion CO + 2H₂ → CH₃OH wird für die Synthese von Methylalkohol gegenüber der Methylalkoholherstellung nach der Gleichung CO₂ + 3H₂ → CH₃OH + H₂O bevorzugt, da erstere Reaktion zum einen ohne die Erzeugung von Produktwasser erfolgt und zum anderen bei der zweiten Reaktion die Katalysatoren schnell Alterungserscheinungen zeigen, was häufige Materialerneuerungen erforderlich macht.

Der für die Methylalkoholsynthese benötigte Wasserstoff wird vorzugsweise aus Salzlösungen von Elementen der achten Nebengruppe, insbesondere Palladium, Rhodium, Ruthenuim, Osmium, Iridium oder Platin, gewonnen, wobei als Katalysatoren Metallhydride, insbesondere Magnesiumhydrid, und/oder Metallcarbide verwendet werden und die benötigte Reaktionsenergie mittels eines Elektrolyseurs, z.B. eines Fahrtwindelektrolyseurs, gewonnen wird. Die Reaktion selbst, die z.B. nach der Gleichung Pd + H₂O → Pd*2H₂+CO₂ abläuft, kann in Mikrohohlfasem stattfinden, die die gleichen Abmessungen wie die in der Synthesegasherstellung verwendeten aufweisen. Die Hohlfaserwände sind auch in diesem Fall als Elektroden ausgebildet, wobei die Innenwand als Anode fungiert. Der Wasserstoff wird dann im Innenraum der Mikrohohlfaser freigesetzt und kann beispielsweise über ein Molekularsieb abgeschieden werden, wohingegen das Kohlendioxid durch die Mikrohohlfaserwand nach außen tritt. Diese Wasserstoffquelle kann zusätzlich zur erfindungsgemäßen Synthesegasherstellung für die Methylalkoholherstellung eingesetzt werden.

Des weiteren kann Wasserstoff aus Reaktionen nach der Gleichung C + 2H₂O → CO₂ + 2H₂ oder CO + H₂O → CO₂ + H₂ gewonnen werden. Neben Kohlenstoff und seinen Verbindungen ist es auch moglich, den benötigten Wasserstoff auf der Basis von Sillicium oder seinen Verbindungen zu gewinnen. Hier sind insbesondere die Reaktionen Si + 3H₂O → H₂SiO₃ + 2H₂ oder SiH₄ + 2H₂O → SiO₂ + 4H₂ zu nennen. Für die nachfolgende Reduktion des SiO₂ können unter anderem Magnesium oder Aluminium eingesetzt werden. Es handelt sich hierbei um endotherm ablaufende Reaktionen nach den Gleichungen 2Mg + SiO₂ → Si + 2MgO bzw. 4Al + 3SiO2 → 3Si + 2Al₂O₃. Das Reaktionsprodukt Al₂O₃ kann dem Reaktionskreislauf über Zyklonabscheider entnommen und wiederverwendet werden ist z.B. als Rohstoff für die Herstellung von Mikrohohlfasem.

Schließlich sind auch Carbide, insbesondere Magnesium- und Calciumcarbid, im Rahmen der Reaktionen Mg₂C₃ + 4H₂O → 2Mg(OH)₂ + C₃H₄ bzw. CaC₂ + 2H₂O → Ca(OH)₂ + C₂H₂, als Wasserstoffträger einsetzbar. Daneben eignen sich Carbide in einem Brennstoffkreislauf auch als Heizmedien zur Bereitstellung der für die endothermen Reaktionen benötigten Wärmeenergie.

Das für die Synthesegasreaktion benötigte Kohlendioxid kann z.B. aus Reaktionen von kohlenstoffhaltigen Verbindungen mit Wasser bzw. Wasserdampf, aus Kohlendioxid enthaltenden Gasen oder aus Feststoffspeichem, insbesondere aus Bariumcarbonat, gewonnen werden. Insbesondere kann Kohlendioxid aus der Luft eingesetzt werden. Als Feststoffspeicher ist z.B. Bariumoxid geeignet, wobei das Kohlendioxid nach der Gleichung BaO + CO₂ → BaCO₃ eingelagert wird. Auch eine Deposition des Kohlendioxids in einem Molekularsieb ist denkbar. Neben der Synthesegasherstellung kann das Kohlendioxid auch gemäß der Gleichung CO₂ + H₂ → CO + H₂O konvertiert oder zur Methanherstellung nach CO₂ + 4H₂ → CH₄ +2H₂O verwendet werden, der wiederum ein Speichermedium für Wasserstoff für den Brenstoffzellenbetrieb darstellt.

Vorzugsweise wird der Wärmetausch zwischen den Reaktanden und den Reaktionsprodukten mindestens einer der vorstehenden Reaktionen durch Verwendung von Mikrohohlfasern mit nicht aktivierten Oberflächen als Wärmetauscher, die insbesondere im Kreuzstromverfahren betrieben werden, durchgeführt. Dies ist beispielsweise bei der erfindungsgemäßen Synthesegasherstellung selbst von Vorteil. In diesem Fall werden das Kohlendioxid und das Wasser bzw. der Wasserdampf vor der Einleitung in die Elektrolyt-Mikrohohlfaser gemeinsam in das Innere weiterer Mikrohohlfasem mit nicht aktivierten Oberflächen eingeleitet, wo sie durch die senkrecht zur Längsachse der Wärmetauscherfasem geleiteten Reaktionsprodukte der Synthesegaserzeugung erhitzt werden. Auf diese Weise läßt sich die für die Hochtemperaturelektrolyse benötigte Energieeinsatz beträchtlich verringern.

Der erzeugte Methylalkohol kann entweder direkt als Brennstoff in einer sogenannten DM-Brennstoffzelle (=Direkt Methanol-Brennstoffzellel) eingesetzt werden, oder er kann einem sogenannten Gasreformationsprozess nach der Reaktionsgleichung CH₃OH + H₂O → CO+3H₂ unterzogen werden, wobei der freigesetzte Wasserstoff beispielsweise für den Betrieb einer herkömmlichen Brennstoffzelle (Proton Exchange Membrane Fuel Cell) eingesetzt werden kann. Der Vorteil der Nutzung des aus dem Reformationsprozess gewonnenen Wasserstoffs gegenüber dem direkten Einsatz des Methylalkohols in einer DM-Brennstoffzelle liegt in der erheblich größeren Leistungsausbeute des ersteren Verfahrens. So kann bei Einsatz von Wasserstoff als Brennstoff ein Wirkungsgrad von etwa 60% gegenüber einem Wirkungsgrad von nur etwa 20% bei direktem Methylalkoholeinsatz erzielt werden.

Der Prozess der Gasreformierung kann ebenfalls unter Verwendung von Mikrohohlfasern als Reaktionsbehälter durchgeführt werden, wobei die für diesen Prozess eingesetzten Mikrohohlfasern vorzugsweise aus dem gleichen Ausgangsmaterial wie die für die Synthesegasherstellung verwendeten Mikrohohlfasem gemacht sind und ebenfalls mit Katalysatoren, vorzugsweise aus Elementen der achten Nebengruppe, beschichtet sind. Die für den Reformationsprozeß benötigte Wärmeenergie kann wiederum durch einen Elektrolyseur oder über Mikrowellen zur Verfügung gestellt werden. Auch hier läßt sich durch den Einsatz von Mikrohohlfaser-Wärmetauschern eine hohe Energieeinsparung verwirklichen.

Die zur Gewinnung von Synthesegas durch Elektrolyse geeignete Vorrichtung weist eine Vielzahl von gestapelten textilen Mikrohohlfasem als Feststoffelektrolyten, deren Innenund Außenoberflächen die Anoden bzw. Kathoden tragen, auf, wobei die Enden der Mikrohohlfasern in einem Rahmen formstabil gebunden sind. Die gestapelten Mikrohohlfasern bilden somit eine Scheibe endlicher Dicke, die durch den Rahmen begrenzt wird. Die Bindung der Hohlfasern im Rahmen kann auf jede geeignete Art erfolgen, beispielsweise durch Vergießen der Hohlfaserenden mit dem Rahmen. Die Enden der Hohlfasern liegen am äußeren Rahmenumfang frei, so daß der Zugang zum Hohlfaserlumen gewährleistet ist.

Vorzugsweise sind die Mikrohohlfasern innerhalb des Stapels parallel zueinander angeordnet, wobei der Rahmen eine rechteckige oder quadratische Form aufweist. Die Mikrohohlfasern eines Stapels weisen somit alle im wesentlichen dieselbe Länge auf. Die Stoffeinleitung in die Hohlfaserlumen erfolgt in dieser Ausführungsform an zwei einander gegenüberliegenden Seiten.

Die erfindungsgemäße Vorrichtung kann mindestens einen weiteren Stapel textiler Mikrohohlfasem aufweisen, die als Wärmetauscher zwischen den Reaktanden und den Reaktionsprodukten der Synthesegasherstellung wirken. Der Vorteil des Einsatzes von Wärmetauschern für die Synthesegasherstellung wurde bereits vorstehend geschildert.

Gemäß einer besonders bevorzugten Ausführungsform weist die erfindungsgemäße Vorrichtung mindestens einen weiteren Stapel textiler Mikrohohlfasern auf, die als Gastrennmembran für die Reaktionsprodukte der Synthesegasherstellung wirken.

Die einzelnen Stapel sind vorzugsweise von gleicher Größe und Form, so daß sie als Funktionsmodule ihrerseits übereinandergestapelt und/oder um 90° zueinander versetzt angeordnet werden können. Auf diese Weise lassen sich Multifunktionsmodule erzeugen, deren Abmessungen so gering sind, daß sie bequem an Bord eines Elektro-Kraftfahrzeugs untergebracht werden können, um Brennstoff für eine Brennstoffzelle zu liefern, die zur Erzeugung der Antriebsenergie für das Fahrzeug dient. Die für die endothermen der beschriebenen Reaktionen benötigte Energie kann durch einen sogenannten Elektrolyseur, z.B. einen Fahrtwindelektrolyseur, oder eine Solarzelle bereitgestellt werden.

Die einzelnen Stapel oder Funktionsmodule können erfindungsgemäß in einem Druckgehäuse enthalten sein, das aus einem Ferromagnetmaterial hergestellt und dessen Oberfläche teilweise emailliert ist. Der Einsatz von teilweise emaillierten Druckbehältern bei den Verfahren der Hochtemperaturelektrolyse ist im Stand der Technik bekannt. Die Emailleschicht dient dabei der Vermeidung eines Kontaktes stark erhitzter Reaktanden mit dem Ferromagnetmaterial.

Der nicht emaillierte Teil der Oberfläche des Druckgehäuses kann mit einer ersten Schicht aus Aluminiumnitrid versehen sein. Aluminiumnitrid, das hervorragende Wärmeleiteigenschaften aufweist, dient als Verzunderungsschutz für die nicht emaillierten Oberflächenteile. Bei der Herstellung des Gehäuses schützt eine Kohle- oder Graphitschüttung, die über den mit Aluminiumnitrid beschichteten Teil der Oberfläche geschichtet wird, diesen vor Oxidationsreaktionen während des Emaillier- und Schweißvorganges. Auf diese Weise läßt sich eine Beständigkeit des Materials auch bei Temperaturen bis über 1100°C erzielen.

Gemäß einer alternativen Ausführungsform kann der nicht emaillierte Teil der Oberfläche des Druckgehäuses mit einer Schicht aus Gold versehen sein. Gold weist den Vorteil einer sehr hohen Wärmeleitfähigkeit sowie einer Indifferenz gegenüber Oxidationsprozessen auf, weswegen in diesem Fall auf eine Kohle- oder Graphitschüttung während der Schweißund Emaillierprozesse verzichtet und die Goldschicht direkt auf den blanken Stahl aufgebracht werden kann. Die chemoselektive Vergoldung ersetzt dabei das bisher übliche Versilbern. Durch die Vergoldung werden die Funktionsoberflächen thermisch beständiger. Trotz des vergleichsweise hohen Goldpreises lassen sich auf diese Weise Korrosionen der Oberflächen des nicht emaillierten Teils des Druckgehäuses auf relativ wirtschaftliche Weise vermeiden, da die Goldschicht lediglich mit einer im µm-Bereich liegenden Dicke aufgebracht werden muß.

Die Erfindung wird nachstehend mit Bezug auf die beigefügten Zeichnugen näher erläutert, die ein nicht beschränkendes Ausführungsbeispiel der vorliegenden Erfindung darstellen. In den Zeichnungen zeigen:
Fig.1a einen Längsschnitt durch eine Mikrohohlfaser zur Verwendung in dem erfindungsgemäßen Verfahren;
Fig. 1b einen Querschnitt durch die Mikrohohlfaser von Fig. 1a;
Fig. 1c eine schematische Darstellung eines Hohlfaserstapels;
Fig. 2a ein Gehäuse für die erfindungsgemäße Vorrichtung zur Gewinnung von Synthesegas;
Fig. 2b das Gehäuse von Fig. 2a in Draufsicht;
Fig. 2c eine schematische Darstellung einer erfindungsgemäßen Verfahrensführung.

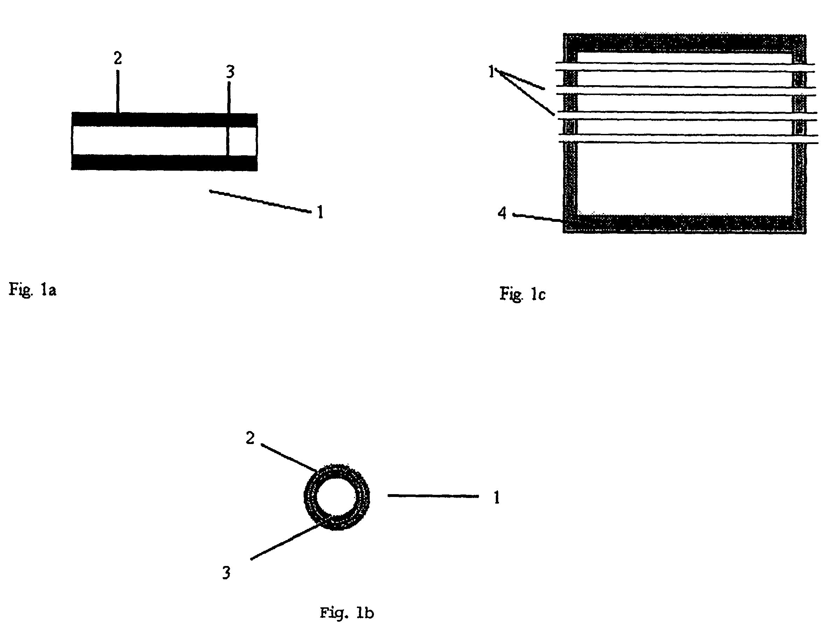

Die Figuren 1a und 1b zeigen eine zur Durchführung des erfindungsgemäßen Verfahrens geeignete Mikrohohlfaser, die in ihrer Gesamtheit mit 1 bezeichnet ist. Die Mikrohohlfaser 1 ist semipermeabel bzw. parasemipermeabel und trägt auf ihren Oberflächen getrennt voneinander die beiden Elektroden, hier außen die Anode 2 und innen die Kathode 3. Welche der beiden Elektroden als Kathode bzw. Anode verwendet wird, hängt von der Führung der Stoffströme ab. Die Elektroden können für auf ihren Außenflächen jeweils mit einem Katalysator beschichtet sein, der z.B. als Spinnvlies ausgebildet ist.

In Figur 1c ist schematisch die Anordnung der Mikrohohlfasem 1 in einem Rahmen 4 dargestellt, in den die Mikrohohlfaserenden, z.B. durch Vergießen, fest eingebunden sind. Um die Deutlichkeit der Darstellung nicht zu gefährden, sind in dieser Figur nur vier Mikrohohlfasern vergrößert und in größerem Abstand zueinander angeordnet gezeigt. In der - Praxis liegen die einzelnen Mikrohohlfasern dicht gepackt und sind über die gesamte Höhe des Rahmens senkrecht zur Ebene der Figur gestapelt. Der Rahmen 4 ist vorzugsweise rechteckig oder quadratisch, wobei die Mikrohohlfasern 1 paralell zueinander angeordnet sind. Es können mehrere Rahmen übereinander gestapelt werden, und/oder jeweils vier Rahmen können um 90° zueinander versetzt kreisförmig angeordnet sein.

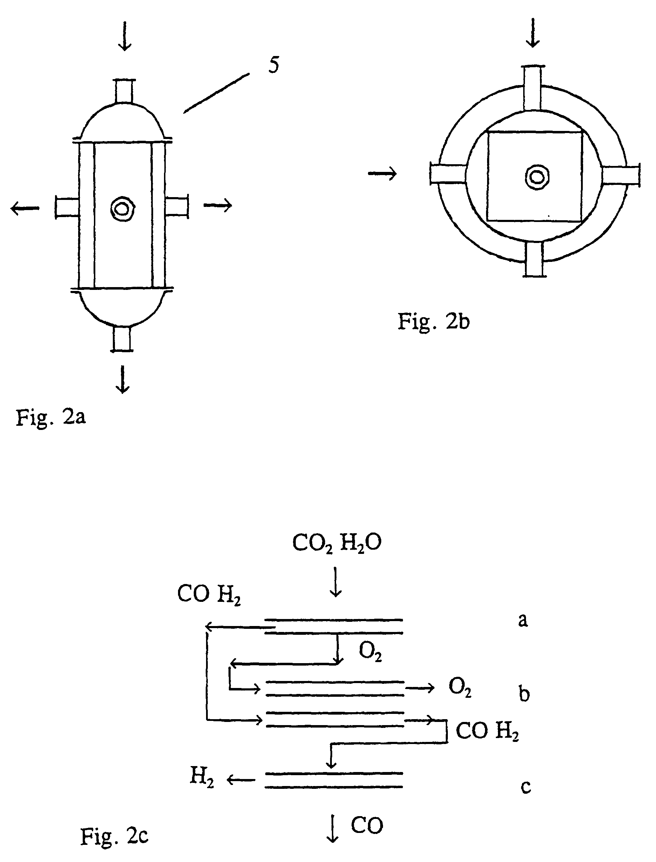

Die Rahmen 4 sind in einem in den Figuren 2a und 2b dargestellten Gehäuse 5 untergebracht, das Drücken, wie sie bei der Synthesegasherstellung und eventuell sich anschließenden Reaktionen herrschen, standhalten kann. In einem solchen Gehäuse 5 können mehrere Funktionsmodule eingepackt sein, die beispielsweise der Synthesegasherstellung, der Gastrennung sowie dem Wärmetausch zwischen verschiedenen Stoffströmen dienen. Die in diesen Figuren eingezeichneten Stoffströme sind nur beispielhaft angegeben. Die Stoffstromführung ist in der Praxis von der Art und Anordnung der einzelnen Funktionsmodule im Gehäuse 5 abhängig.

Ein Beispiel der Führung der Stoffströme ist in Fig. 2c gegeben. Das Bezugszeichen a kennzeichnet das Funktionsmodul für die Synthesegasherstellung, das schematisch durch eine Mikrohohlfaser im Querschnitt dargestellt ist. Kohlendioxid und Wasser bzw. Wasserdampf werden vorzugsweise axial zur Ebene des Mikrohohlfaserstapels eingeleitet, reagieren an den Elektroden, wobei der entstehende Sauerstoff wieder senkrecht aus den Hohlfasern austritt, wohingegen das Synthesegas, im wesentlichen H₂ und CO₂, gegebenenfalls mit einem Anteil COₓ, aus den Hohlfaserenden austritt. Diese Stoffstromführung ist deshalb besonders günstig, da die Synthesegaserzeugung im Überdruck stattfindet, für den Mikrohohlfasem aufgrund ihres geringen Durchmessers ungeeignet sind. Vorzugsweise ist ein weiterer Mikrohohlfaserstapel b aus nicht permeablem Material als Wärmetauschelement vorgesehen, wobei, wie in der Figur gezeigt, das Synthesegas und der gebildete Sauerstoff getrennt voneinander in ein Ende verschiedener Mikrohohlfasem, die als Gastrennmembran ausgebildet ist, eingeleitet werden. Senkrecht zu diesem Stapel wird das zur Synthesegasherstellung verwendete H₂O und CO₂ geleitet, bevor es über die Mikrohohlfasern des Stapels a geleitet wird. Das Modul bzw. der Stapel c dient der Abtrennung des Wasserstoffes aus dem Synthesegas. Hierzu wird das Synthesegas vorzugsweise wieder senkrecht zur Stapelebene über die semipermeablen Mikrohohlfasern geleitet, wobei der Wasserstoff durch die Hohlfaserwände hindurchdiffundiert und aus den Enden der Mikrohohlfasern ausgeleitet werden kann, wohingegen das COₓ senkrecht zur Stapelebene herausgeleitet wird.

Gegebenenfalls können sich innerhalb desselben Druckgehäuses 5 ein Raum für die Synthese von Methylalkohol sowie ein Mikrohohlfaserstapel bzw. Modul für den bereits beschriebenen Gasreformationsprozess anschließen. Es ist möglich, die bei der Synthese des Methylalkohols freigesetzte Wärme zur Fahrzeugklimatisierung zu verwenden, wenn die erfindungsgemäße Vorrichtung in einem Kraftfahrzeug eingesetzt wird. Der Methylalkohol kann des weiteren in einem Tank zwischengespeichert werden.

Die vorstehend angegebene Stoffstromführung ist lediglich als Beispiel angegeben. Selbstverständlich sind je nach Bedarf auch andere Stoffstromführungen möglich. Aufgrund der Kleinheit der gesamten Anordnung, die durch die Verwendung von Mikrohohlfasem für die verschiedenen Verfahrensschritte ermöglicht wird, kann das Druckgehäuse mit den einzelnen Funktionsmodulen in bzw. an einem Kraftfahrzeug angebracht werden, um den für einen elektrischen Fahrzeugantrieb mittels Brennstoffzelle benötigten Brennstoff bereitzustellen.

## Patentansprüche

1. Verfahren zur Gewinnung von Synthesegas durch Elektrolyse, **dadurch gekennzeichnet, dass** die Elektrolyse unter Verwendung von textilen Mikrohohlfasern ( 1 ) mit einem Außendurchmesser von 1 bis 280 µm als Feststoffelektrolyten, deren Innen- und Außenoberflächen die Anoden (2) bzw. Kathoden (3) tragen, durchgeführt wird, wobei Sauerstoff als Permeat durch die Wände der Mikrohohlfaser (1) austritt.

2. Verfahren nach Anspruch 1, **dadurch gekennzeichnet, daß** die textilen Mikrohohlfasern (1) aus einem Oxid der Titangruppe, das mit einem Seltenen Erdmetall stabilisiert ist, hergestellt sind.

3. Verfahren nach Anspruch 2, **dadurch gekennzeichnet, daß** die textilen Mikrohohlfasern (1) aus Yttrium-stabilisiertem Zirkonoxid hergestellt sind.

4. Verfahren nach einem der vorstehenden Ansprüche, **dadurch gekennzeichnet, daß** die Mikrohohlfasem (1) einen Außendurchmesser von 50µm bis 280µm aufweisen.

5. Verfahren nach einem der vorstehenden Ansprüche, **dadurch gekennzeichnet, daß** Kohlendioxid und Wasser oder Wasserdampf in jeweils ein Ende der Hohlfaserlumen eingeleitet und einer Hochtemperaturelekrolyse unterzogen werden, wobei durch die Hohlfaserwand als Permeat austretender Sauerstoff getrennt von dem aus dem zweiten Ende der Hohlfaserlumen austretenden Synthesegas in Form einer Mischung aus Kohlenmonoxid und Wasserstoff abgeleitet wird.

6. Verfahren nach Anspruch 5, **dadurch gekennzeichnet, daß** der gebildete Wasserstoff nach Austritt aus dem Lumen des Hohlfaserelektrolyten vom Kohlenmonoxid getrennt wird, indem er durch eine Gastrennmembran geleitet wird.

7. Verfahren nach Anspruch 6, **dadurch gekennzeichnet, daß** die Gastrennmembran als Mikrohohlfasermembran ausgebildet ist.

8. Verfahren nach mindestens einem der vorstehenden Ansprüche 6 oder 7, **dadurch gekennzeichnet, daß** der gebildete Wasserstoff einer Brennstoffzelle als Brennstoff zugeführt wird.

9. Verfahren nach Anspruch 8, **dadurch gekennzeichnet, daß** mindestens ein Reaktionsprodukt der Brennstoffzellenreaktion in die Synthesegasreaktion rückgeführt wird.

10. Verfahren nach einem der Ansprüche 1 bis 9, **dadurch gekennzeichnet, daß** das im Synthesegas enthaltene Kohlenmonoxid abgetrennt und mit Wasserstoff oder einem Wasserstofflieferanten zu einer Kohlenwasserstoff enthaltenden Verbindung, insbesondere Methylalkohol, synthetisiert wird.

11. Verfahren nach Anspruch 10, **dadurch gekennzeichnet, daß** der für die Synthese des Methylalkohols benötigte Wasserstoff aus Salzlösungen von Elementen der achten Nebengruppe, insbesondere Palladium, Rhodium, Ruthenium, Osmium, Iridium, oder Platin, gewonnen wird, wobei als Katalysatoren Metallhydride, insbesondere Magnesiumhydrid oder Eisentitanhydrid, und/oder Metallcarbide verwendet werden und die benötigte Reaktionsenergie mittels eines Elektrolyseurs gewonnen wird.

12. Verfahren nach mindestens einem der vorstehenden Ansprüche; **dadurch gekennzeichnet, daß** der Wärmetausch zwischen den Reaktanden und Reaktionsprodukten mindestens einer der vorstehenden Reaktionen durch Verwendung von Mikrohohlfasern mit nicht aktivierten Oberflächen als Wärmetauscher, die insbesondere im Kreuzstromverfahren betrieben werden, durchgeführt wird.

13. Verfahren nach mindestens einem der vorstehenden Ansprüche, **dadurch gekennzeichnet, daß** das für die Synthesegasreaktion benötigte Kohlendioxid aus Reaktionen von kohlenstoffhaltigen Verbindungen mit Wasser bzw. Wasserdampf, aus Kohlendioxid enthaltenden Gasen oder aus Feststoffspeichem, insbesondere aus Bariumcarbonat, gewonnen wird.

14. Vorrichtung zur Gewinnung von Synthesegas durch Elektrolyse, **dadurch gekennzeichnet, dass** sie eine Vielzahl von gestapelten textilen Mikrohohlfasern (1) mit einem Außendurchmesser von 1 bis 280 µm als Feststoffelektrolyten, deren Innen- und Außenoberflächen die Anoden (2) bzw. Kathoden (3) tragen, aufweist, wobei die Enden der Mikrohohlfasern in einem Rahmen(4) formstabil gebunden sind und die Wände der Mikrohohlfaser (1) für Sauerstoff als Permeat durchlässig sind.

15. Vorrichtung nach Anspruch 14, **dadurch gekennzeichnet, daß** die Mikrohohlfasem (1) innerhalb des Stapels parallel zueinander angeordnet sind und der Rahmen (4) eine rechteckige oder quadratische Form aufweist.

16. Vorrichtung nach Anspruch 14 oder 15, **dadurch gekennzeichnet, daß** daß die textilen Mikrohohlfasem (1) aus einem Oxid der Titangruppe, das mit einem Seltenen Erdmetall stabilisiert ist, hergestellt sind.

17. Vorrichtung nach Anspruch 16, **dadurch gekennzeichnet, daß** die textilen Mikrohohlfasem aus Yttrium-stabilisiertem Zirkonoxid hergestellt sind.

18. Vorrichtung nach mindestens einem der vorstehenden Ansprüche 14 bis 17, **dadurch gekennzeichnet, daß** sie mindestens einen weiteren Stapel textiler Mikrohohlfasern aufweist, die als Wärmetauscher zwischen den Reaktanden und den Reaktionsprodukten der Synthesegasreaktion wirken.

19. Vorrichtung nach mindestens einem der Ansprüche 14 bis 18, **dadurch gekennzeichnet, daß** sie mindestens einen weiteren Stapel textiler Mikrohohlfasem aufweist, die als Gastrennmembranen für die Reaktionsprodukte der Synthesegasgewinnung wirken.

20. Vorrichtung nach mindestens einem der Ansprüche 14 bis 19, **dadurch gekennzeichnet, daß** die Mikrohohlfasem einen Außendurchmesser von 50µm bis 280µm, aufweisen.

21. Vorrichtung nach mindestens einem der Ansprüche 14 bis 20, **dadurch gekennzeichnet, daß** die Stapel in einem Druckgehäuse (5) enthalten sind, das aus einem Ferromagnetmaterial hergestellt und dessen Oberfläche teilweise emailliert ist.

22. Vorrichtung nach Anspruch 21, **dadurch gekennzeichnet, daß** der nicht emaillierte Teil der Oberfläche des Druckgehäuses (5) mit einer Schicht aus Aluminiumnitrid versehen ist.

23. Vorrichtung nach Anspruch 21, **dadurch gekennzeichnet, daß** der nicht emaillierte Teil der Oberfläche des Druckgehäuses (5) mit einer Schicht aus Gold versehen ist.

24. Vorrichtung nach mindestens einem der Ansprüche 18 bis 23, **dadurch gekennzeichnet, daß** die einzelnen Stapel zueinander einen Winkel von etwa 90° bilden.

## Claims

1. Procedure for producing synthetic gas through electrolysis, **characterized by** the fact that electrolysis is carried out using textile hollow microfibers (1) with an outer diameter of 1µm to 280µm as solid electrolytes whose inner and outer surfaces bear anodes (2) or cathodes (3), the oxygen escaping as permeate through the walls of the hollow microfibers (1).

2. Procedure according to Claim 1, **characterized in that** the textile hollow microfibers (1) are produced from an oxide of the titanium group stabilized with a rare lanthanide.

3. Procedure according to Claim 2, **characterized in that** the textile hollow microfibers (1) are produced from zirconium oxide stabilized with yttrium.

4. Procedure according to any of the preceding claims, **characterized in that** the hollow microfibers (1) have an outer diameter of 50µm to 280µm.

5. Procedure according to any of the preceding claims, **characterized in that** carbon dioxide and water or water vapour are introduced into one end of the hollow fiber lumen and subjected to high-temperature electrolysis, the oxygen escaping as permeate through the walls of the hollow fiber being collected separately from the synthetic gas released from the other end of the hollow fiber lumen in the form of a mixture of carbon monoxide and hydrogen.

6. Procedure according to Claim 5, **characterized in that** the hydrogen produced is separated from carbon monoxide after leaving the lumen of the hollow fiber electrolyte by sending it through a gas-separation membrane.

7. Procedure according to Claim 6, **characterized in that** said gas-separation membrane is in the form of a hollow microfiber membrane.

8. Procedure according to at least one of the preceding Claims 6 or 7, **characterized in that** the hydrogen produced is conveyed as fuel to a fuel cell.

9. Procedure according to Claim 8, **characterized in that** at least one product of the reaction in the fuel cell is re-used in the synthetic gas reaction.

10. Procedure according to any of Claims 1 to 9, **characterized in that** the carbon monoxide contained in the synthetic gas is separated and synthesized using hydrogen or a hydrogen supplier to form a composite containing hydrocarbon, especially methyl alcohol.

11. Procedure according to Claim 10, **characterized in that** the hydrogen needed for the synthesis of methyl alcohol is produced from salt solutions of elements of the 8^{th} sub-group, especially palladium, rhodium, ruthenium, osmium, iridium or platinum, and that metallic hydrides, especially magnesium hydride or ferrous titanium hydride and/or metallic carbides are used as catalysts, and that the energy needed for the reaction is produced by means of an electrolyser.

12. Procedure according to at least one of the preceding claims, **characterized in that** heat transfer between the reactants and products of the reaction in at least one of the preceding reactions is carried out using hollow microfibers with non-activated surfaces as heat exchangers operating especially in cross flow procedure.

13. Procedure according to at least one of the preceding claims, **characterized in that** the carbon dioxide necessary for the synthetic gas reaction is obtained from the reaction of composites containing carbon, using water or water vapour, from gasses containing carbon dioxide or from storage solids, especially from barium carbonate.

14. Device for producing synthetic gas through electrolysis, **characterized in that** the electrolysis is carried out using a plurality of stacked textile hollow microfibers (1) with an outer diameter of 1µm to 280µm as solid electrolytes whose inner and outer surfaces bear anodes (2) or cathodes (3), the ends of the textile hollow microfibers being firmly fitted into a frame (4) and oxygen escaping as permeate through the walls of the hollow microfibers (1).

15. Device according to Claim 14, **characterized in that** the hollow microfibers (1) are aligned side by side within the stack and that the frame (4) has a rectangular or square shape.

16. Device according to Claim 14 or 15, **characterized in that** the textile hollow microfibers (1) are produced from an oxide of the titanium group stabilized with a rare lanthanide.

17. Device according to Claim 16, **characterized in that** the textile hollow microfibers (1) are produced from zirconium oxide stabilized with yttrium.

18. Device according to at least one of the preceding Claims 14 to 17, **characterized in that** it has at least one other stack of textile hollow microfibers serving as heat exchanger(s) between the reactants and the products of the synthetic gas reaction.

19. Device according to at least any of the preceding Claims 14 to 18, **characterized in that** it has at least one other stack of textile hollow microfibers serving as gas-separation membranes for the products of the reaction during synthetic gas production.

20. Device according to at least one of the preceding Claims 14 to 19, **characterized in that** the textile hollow microfibers have an outer diameter of 50µm to 280µm.

21. Device according to at least one of the preceding Caims 14 to 20, **characterized in that** the stacks are contained in a pressure casing (5) made of ferromagnetic material, having a partially enamelled surface.

22. Device according to Claim 21, **characterized in that** the non-enamelled part of the pressure casing surface (5) is covered with an aluminium nitride coating.

23. Device according to Claim 21, **characterized in that** the non-enamelled part of the pressure casing surface (5) is covered with a gold coating.

24. Device according to at least one of preceding Claims 18 to 23, **characterized in that** the individual stacks form an angle of about 90° in relation to one another.

## Revendications

1. Procédé pour la production de gaz synthétique par électrolyse, **caractérisé en ce que** l'électrolyse s'effectue en utilisant, comme électrolyte solide, des microfibres textiles creuses (1) ayant un diamètre extérieur d'environ 1µm à 280 µm, dont les surfaces intérieure et extérieure portent les anodes (2) ou les cathodes (3), l'oxygène sortant comme perméat à travers des parois de la microfibre creuse (1).

2. Procédé selon la revendication 1, **caractérisé en ce que** les microfibres textiles creuses (1) sont produites à partir d'un oxyde du groupe du titane stabilisé à l'aide d'un lanthanoïde rare.

3. Procédé selon la revendication 2, **caractérisé en ce que** les microfibres textiles creuses (1) sont produites à partir d'oxyde de zircone stabilisé à l'yttrium.

4. Procédé selon une quelconque des revendications précédentes, **caractérisé en ce que** les microfibres creuses (1) ont un diamètre extérieur de 50 µm à 280 µm.

5. Procédé selon une quelconque des revendications précédentes, **caractérisé en ce que** le dioxyde de carbone et l'eau ou la vapeur sont introduits dans un bout du lumen des fibres creuses et soumis à une électrolyse à haute température, l'oxygène sortant comme perméat à travers de la paroi de la fibre creuse étant retiré séparément du gaz synthétique sortant de l'autre bout du lumen des fibres creuses, sous forme d'un mélange de monoxyde de carbone et d'hydrogène.

6. Procédé selon la revendication 5, **caractérisé en ce que** l'hydrogène produit est séparé du monoxyde de carbone après la sortie du lumen de l'électrolyte à fibre creuse en le faisant passer à travers une membrane de séparation de gaz.

7. Procédé selon la revendication 6, **caractérisé en ce que** ladite membrane de séparation de gaz se présente sous forme d'une membrane à microfibres creuses

8. Procédé selon au moins une quelconque des revendications précédentes 6 ou 7, **caractérisé en ce que** l'hydrogène produit est conduit comme combustible à une pile à combustible.

9. Procédé selon la revendication 8, **caractérisé en ce qu'**au moins un produit de la réaction dans la pile à combustible est reconduit dans la réaction de gaz synthétique.

10. Procédé selon une quelconque des revendications 1 à 9, **caractérisé en ce que** le monoxyde de carbone contenu dans le gaz synthétique est séparé et synthétisé à l'aide d'hydrogène ou d'un fournisseur d'hydrogène pour former un composite contenant de l'hydrocarbure, en particulier de l'alcool méthylique.

11. Procédé selon la revendication 10, **caractérisé en ce que** l'hydrogène nécessaire pour la synthèse de l'alcool méthylique est produit à partir de solutions salines d'éléments du huitième sous-groupe, en particulier le palladium, le rhodium, le ruthénium, l'osmium, l'iridium ou le platine, et que des hydrures métalliques, en particulier l'hydrure de magnésium ou l'hydrure de titane ferreux et/ou les carbures métalliques sont utilisés comme catalyseurs et que l'énergie nécessaire pour la réaction est obtenue moyennant un électrolyseur.

12. Procédé selon au moins une quelconque des revendications précédentes, **caractérisé en ce que** l'échange thermique entre les réactants et les produits de la réaction dans au moins une de réactions précédentes s'effectue à l'aide de microfibres creuses à surfaces non-activés comme échangeur thermique, actionnés surtout en procédé à écoulements croisés.

13. Procédé selon au moins une quelconque des revendications précédentes, **caractérisé en ce que** le dioxyde de carbone nécessaire pour la réaction du gaz synthétique est obtenu par les réactions de composites contenant du carbone avec de l'eau ou de la vapeur, à partir de gaz contenant du dioxyde de carbone ou à partir d'accumulateurs solides, en particulier à partir de carbonate de barium.

14. Installation pour obtenir du gaz synthétique par électrolyse, **caractérisée en ce qu'**elle dispose, à titre d'électrolyte solide, d'une pluralité de microfibres textiles creuses entassées (1) ayant un diamètre extérieur de 1 µm à 280 µm, dont les surfaces intérieures et extérieures portent les anodes (2) ou les cathodes (3), les bouts des microfibres creuses étant reliés en un cadre stable (4) et les parois de la microfibre creuse (1) étant perméables à l'oxygène comme perméat.

15. Installation selon la revendication 14, **caractérisée en ce que** le microfibres creuses (1) sont alignées en parallèle à l'intérieur du tas et que le cadre (4) a une forme rectangulaire ou carrée.

16. Installation selon la revendication 14 ou 15, **caractérisée en ce que** les microfibres textiles creuses (1) sont produites à partir d'un oxyde du groupe du titane stabilisé avec un lanthanoïde rare.

17. Installation selon la revendication 16, **caractérisée en ce que** les microfibres textiles creuses (1) sont produites à partir d'oxyde de zircone stabilisé à l'yttrium.

18. Installation selon au moins une quelconque des revendications précédentes 14 à 17, **caractérisée en ce qu'**elle dispose d'au moins un autre tas de microfibres textiles creuses ayant la fonction d'échangeur thermique entre les réactants et les produits de la réaction de gaz synthétique.

19. Installation selon au moins une quelconque des revendications 14 à 18, **caractérisée en ce qu'**elle dispose d'au moins un autre tas de microfibres textiles creuses dont la fonction est celle de membranes de séparation de gaz pour les produits de la réaction lors de la production de gaz synthétique.

20. Installation selon au moins une quelconque des revendications 14 à 19, **caractérisée en ce que** les microfibres textiles creuses ont un diamètre extérieur de 50 µm 280 µm

21. Installation selon au moins une quelconque des revendications 14 à 20, **caractérisée en ce que** les tas sont contenus dans un boitier pression (5) fait de matériau ferromagnétique et dont la surface est partiellement émaillée.

22. Installation selon la revendication 21, **caractérisée en ce que** la partie non émaillée de la surface du boitier pression (5) est couvert d'une couche de nitrure d'aluminium.

23. Installation selon la revendication 21, **caractérisé en ce que** la partie non émaillée de la surface du boitier pression (5) est couvert d'une couche d'or.

24. Installation selon au moins une quelconque des revendications 18 à 23, **caractérisée en ce que** les tas individuels forment un angle d'environ 90° les uns par rapport aux autres.
